# EUROPEAN PATENT APPLICATION

(11) **EP 3 182 199 A1**
(43) Date of publication of application: **21.06.2017**
(21) Application number: 16204022.4
(22) Date of filing: 14.12.2016
(51) Int. Cl.: G02F 1/167

(54) **DISPLAY DEVICE AND ELECTRONIC APPARATUS**

(30) Priority: 16.12.2015 JP 2015244924
(71) Applicant: Seiko Epson Corporation, Tokyo 160-8801 (JP)
(72) Inventor: Amano, Takahiro, Nagano, 392-8502 (JP)
(74) Representative: Hoffmann Eitle

(57) **Abstract**

An electrophoretic display device includes an element substrate, a first pixel electrode and a second pixel electrode installed on the element substrate, a first adhesive film installed on the first pixel electrode and the second pixel electrode, and a passage, which is located between the first pixel electrode and the second pixel electrode, which opens in a periphery of the first adhesive film, and through which a gas passes.

## Description

### BACKGROUND

### 1. Technical Field

The present invention relates to a display device and an electronic apparatus.

### 2. Related Art

There has been widely used an electrophoretic display device in which particles having electric charge move in a dispersion medium. The electrophoretic display device has little flickers in screen, and is therefore used for a display device for browsing electronic books, and so on. The electrophoretic display device is disclosed in JP-A-2010-204376. According to the document, the electrophoretic display device is provided with a pair of substrates on which electrodes are respectively installed. Further, between the electrodes, there is installed an electrophoretic sheet paved with capsules, each incorporating a dispersion medium including white charged particles and black charged particles. The electrophoretic sheet sandwiched between the substrates is fixed to the substrates with adhesive films.

In the capsule, the white charged particles are charged negatively (-), and the black charged particles are charged positively (+). Further, by applying a voltage between the electrodes installed on the substrates opposed to each other, the black charged particles are attracted by one of the electrodes, and the white charged particles are attracted by the other of the electrodes. Then, by replacing the voltages of the electrodes with each other, the positions of the black charged particles and the white charged particles are replaced with each other.

On one of the substrates, there is installed pixel electrodes, and the pixel electrodes each form a pixel. Further, it is arranged that it is possible to display a predetermined figure by controlling the positions of the black charged particles and the white charged particles pixel by pixel.

When installing the electrophoretic sheet on the substrate, bonding via the adhesive film is performed. On this occasion, air enters an area between the substrate and the adhesive film to form bubbles in some cases. Further, the bubbles are visible when observing a display pattern, and are obstacles in observing the display pattern. Therefore, there has been desired a display device hard for bubbles to exist between the substrate and the adhesive film.

### SUMMARY

An advantage of some aspects of the invention is to solve the problems described above, and the invention can be implemented as the following forms or the application examples.

### Application Example 1

A display device according to this application example includes a substrate, a first pixel electrode and a second pixel electrode installed on the substrate, an adhesive film installed on the first pixel electrode and the second pixel electrode, and a passage, which is located between the first pixel electrode and the second pixel electrode, which opens in a periphery of the adhesive film, and through which a gas passes.

According to this application example, the display device is provided with a substrate, and the first pixel electrode and the second pixel electrode are installed on the substrate. Further, the adhesive film is installed on the first pixel electrode and the second pixel electrode. Further, between the first pixel electrode and the second pixel electrode, there is installed the passage which opens in the periphery of the adhesive film, and through which a gas passes.

The adhesive film is installed in the display device. By installing members, display color of which changes in response to a voltage, so as to overlap the adhesive film, it is possible for the display device to electrically control the display pattern. When installing the adhesive film on the substrate, a bubble remains between the substrate and the adhesive film in some cases. In this case, since the light is reflected between the adhesive film and the bubble, it becomes difficult to observe the display pattern. This display device has a passage between the first pixel electrode and the second pixel electrode, and the passage opens in the periphery of the substrate. Therefore, in the case in which the bubble remains between the substrate and the adhesive film, by applying pressure to the bubble, it is possible to make the gas in the bubble pass through the passage to move to the periphery of the substrate. As a result, it is possible to make the display device hard for the bubble to exist between the first pixel electrode and the second pixel electrode, and the adhesive film.

### Application Example 2

In the display device according to the application example described above, the display device further includes a protruding part installed along the passage.

According to this application example, the protruding part is installed between the substrate and the adhesive film, and the protruding part is installed along the passage. The protruding part forms a space between the substrate and the adhesive film, and the spaces are connected to each other to form the passage. Further, even in the case in which the display device is pressed in the thickness direction of the substrate, the protruding part prevents the space from crushing. Therefore, even in the case in which the display device is pressed in the thickness direction of the substrate, the passage can be maintained.

### Application Example 3

In the display device according to the application example described above, a height of the protruding part in a thickness direction of a substrate is one of equal to or lower than a height of the first pixel electrode and a height of the second pixel electrode.

According to this application example, the protruding part is installed so that the height of the protruding part is equal to or lower than the height of the first pixel electrode and the height of the second pixel electrode. In the case in which the height of the protruding part is higher than the height of the first pixel electrode or the height of the second pixel electrode, there is a possibility that the first pixel electrode or the second pixel electrode and the adhesive film become separated from each other. On this occasion, since the bubble occurs between the first pixel electrode or the second pixel electrode and the adhesive film, it becomes difficult to observe the display pattern. In this display device, since the height of the protruding part is lower than the height of the first pixel electrode and the height of the second pixel electrode, it is possible to prevent the first pixel electrode or the second pixel electrode and the adhesive film from becoming separated from each other. As a result, it is possible to prevent the bubble from occurring between the first pixel electrode or the second pixel electrode and the adhesive film.

### Application Example 4

In the display device according to the application example described above, the first pixel electrode and the second pixel electrode each have a base protruding part and an electrically-conductive film located on the base protruding part, and the protruding part and the base protruding part are equal in height from the substrate to each other.

According to this application example, the first pixel electrode and the second pixel electrode are each provided with the base protruding part, and the electrically-conductive film is installed on the base protruding part. Further, the protruding part and the base protruding part are equal in the height from the substrate to each other. In this case, it is possible to surely make the height of the first pixel electrode and the second pixel electrode in the thickness direction of the substrate higher than the height of the protruding part.

### Application Example 5

In the display device according to the application example described above, the protruding part and the base protruding part are the same in material as each other.

According to this application example, the protruding part and the base protruding part are the same in material as each other. In this case, the protruding part and the base protruding part can be installed in the same process. Therefore, the display device can be manufactured with high productivity compared to the case of manufacturing the base protruding part and the protruding part in respective processes separate from each other.

### Application Example 6

An electronic apparatus according to this application example includes a display device, and a drive device adapted to drive the display device, and the display device is the display device according to any one of the application examples.

According to this application example, in the electronic apparatus, the drive device drives the display device. Further, the display device is made to be a device hard for the bubble to occur in the display pattern. Therefore, it is possible to make the electronic apparatus be a device provided with the display device hard for the bubble to occur in the display pattern.

### Application Example 7

A method of manufacturing a display device according to this application example includes installing a protruding part on a substrate, and installing a first pixel electrode and a second pixel electrode on the substrate, and the protruding part is located between the first pixel electrode and the second pixel electrode.

According to this application example, the protruding part, the first pixel electrode, and the second pixel electrode are installed on the substrate. The protruding part is located between the first pixel electrode and the second pixel electrode. The adhesive film is installed on the first pixel electrode and the second pixel electrode. Since the protruding part is installed between the first pixel electrode and the second pixel electrode, the adhesive film adheres to the protruding part, and the adhesive film is prevented from adhering to the substrate. Therefore, the passage through which the gas passes is formed between the first pixel electrode and the second pixel electrode. Further, even in the case in which the gas enters an area between the first pixel electrode and the second pixel electrode, and the adhesive film, the gas can easily be moved to the passage. As a result, it is possible to make the display device hard for the bubble to occur between the first pixel electrode and the second pixel electrode, and the adhesive film.

### Application Example 8

A method of manufacturing a display device according to this application example includes installing a first base protruding part, a second base protruding part, and a protruding part on a substrate, installing a first pixel electrode on the first base protruding part and a second pixel electrode on the second base protruding part, and installing an adhesive film on the first pixel electrode and the second pixel electrode, and the protruding part is located between the first base protruding part and the second base protruding part, and is equal in height to the first base protruding part and the second base protruding part.

According to this application example, the first base protruding part, the second base protruding part, and the protruding part are installed on the substrate. Further, the first pixel electrode is installed on the first base protruding part, and the second pixel electrode is installed on the second base protruding part. The protruding part is located between the first base protruding part and the second base protruding part. Therefore, the protruding part is located between the first pixel electrode and the second pixel electrode. Further, the height of the protruding part is lower than those of the first pixel electrode and the second pixel electrode.

The adhesive film is installed on the first pixel electrode and the second pixel electrode. Since the first pixel electrode and the second pixel electrode are higher than the protruding part, the adhesive film adheres tightly to the first pixel electrode and the second pixel electrode. Further, it is possible to make the gas hard to enter an area between the first pixel electrode and the second pixel electrode, and the adhesive film. Further, the protruding part is installed between the first pixel electrode and the second pixel electrode. Thus, since the adhesive film adheres tightly to the protruding part, the adhesive film is prevented from adhering to the substrate. Therefore, the passage through which the gas passes is formed between the first pixel electrode and the second pixel electrode. Further, even in the case in which the gas enters an area between the first pixel electrode and the second pixel electrode, and the adhesive film, the gas can easily be moved to the passage. As a result, it is possible to make the display device hard for the bubble to occur between the first pixel electrode and the second pixel electrode, and the adhesive film.

The protruding part and the base protruding part can be installed in the same process. Therefore, the display device can be manufactured with high productivity compared to the case of manufacturing the protruding part and the base protruding part in respective processes separate from each other.

### BRIEF DESCRIPTION OF THE DRAWINGS

The invention will be described with reference to the accompanying drawings, wherein like numbers reference like elements.
Fig. 1 is a schematic horizontal cross-sectional view showing a structure of an electrophoretic display device according to a first embodiment of the invention.
Fig. 2 is a schematic side cross-sectional view showing a structure of the electrophoretic display device.
Fig. 3 is a schematic plan view showing a structure of an element substrate.
Fig. 4 is a schematic plan view showing a principal part of the structure of the element substrate.
Fig. 5 is a schematic side cross-sectional view showing a principal part of a structure of pixel electrodes and protruding parts.
Fig. 6 is a schematic side cross-sectional view showing a principal part of the structure of the pixel electrodes and the protruding part.
Fig. 7 is a flowchart of a method of manufacturing the electrophoretic display device.
Fig. 8 is a schematic side cross-sectional view for explaining the method of manufacturing the electrophoretic display device.
Fig. 9 is a schematic side cross-sectional view for explaining the method of manufacturing the electrophoretic display device.
Fig. 10 is a schematic side cross-sectional view for explaining the method of manufacturing the electrophoretic display device.
Fig. 11 is a schematic side cross-sectional view for explaining the method of manufacturing the electrophoretic display device.
Fig. 12 is a schematic side cross-sectional view for explaining the method of manufacturing the electrophoretic display device.
Fig. 13 is a schematic side cross-sectional view for explaining the method of manufacturing the electrophoretic display device.
Fig. 14 is a schematic side cross-sectional view for explaining the method of manufacturing the electrophoretic display device.
Fig. 15 is a schematic side cross-sectional view for explaining the method of manufacturing the electrophoretic display device.
Fig. 16 is a schematic side cross-sectional view for explaining a method of manufacturing an electrophoretic display device according to a second embodiment of the invention.
Fig. 17 is a schematic side cross-sectional view for explaining the method of manufacturing the electrophoretic display device.
Fig. 18 is a schematic side cross-sectional view for explaining the method of manufacturing the electrophoretic display device.
Fig. 19 is a schematic side cross-sectional view for explaining the method of manufacturing the electrophoretic display device.
Fig. 20 is a schematic side cross-sectional view for explaining a method of manufacturing an electrophoretic display device according to a third embodiment of the invention.
Fig. 21 is a schematic side cross-sectional view for explaining the method of manufacturing the electrophoretic display device.
Fig. 22 is a schematic side cross-sectional view for explaining the method of manufacturing the electrophoretic display device.
Fig. 23 is a schematic side cross-sectional view showing a principal part of a structure of an element substrate according to a fourth embodiment of the invention.
Fig. 24 is a flowchart of a method of manufacturing the electrophoretic display device.
Fig. 25 is a schematic side cross-sectional view for explaining the method of manufacturing the electrophoretic display device.
Fig. 26 is a schematic side cross-sectional view for explaining the method of manufacturing the electrophoretic display device.
Fig. 27 is a schematic side cross-sectional view for explaining the method of manufacturing the electrophoretic display device.
Fig. 28 is a schematic side cross-sectional view for explaining the method of manufacturing the electrophoretic display device.
Fig. 29 is a schematic side cross-sectional view showing a principal part of a structure of an element substrate according to a fifth embodiment of the invention.
Fig. 30 is a flowchart of a method of manufacturing the electrophoretic display device.
Fig. 31 is a schematic side cross-sectional view for explaining the method of manufacturing the electrophoretic display device.
Fig. 32 is a schematic side cross-sectional view for explaining the method of manufacturing the electrophoretic display device.
Fig. 33 is a schematic side cross-sectional view for explaining the method of manufacturing the electrophoretic display device.
Fig. 34 is a schematic side cross-sectional view for explaining the method of manufacturing the electrophoretic display device.
Fig. 35 is a schematic side cross-sectional view for explaining the method of manufacturing the electrophoretic display device.
Fig. 36 is a schematic perspective view showing a structure of an electronic book according to a sixth embodiment of the invention.
Fig. 37 is a schematic perspective view showing a structure of a watch.
Fig. 38 is a schematic horizontal cross-sectional view showing a structure of an electrophoretic display device according to a comparative example.
Fig. 39 is a schematic side cross-sectional view showing a structure of a pixel electrode according to the comparative example.

### DESCRIPTION OF EXEMPLARY EMBODIMENTS

In the present embodiment, an electrophoretic display device and a characteristic example for manufacturing the electrophoretic display device will be described with reference to the accompanying drawings. It should be noted that each of members in each of the drawings is illustrated with a different scale from each other in order for providing a size large enough to be recognized in the drawing.

### First Embodiment

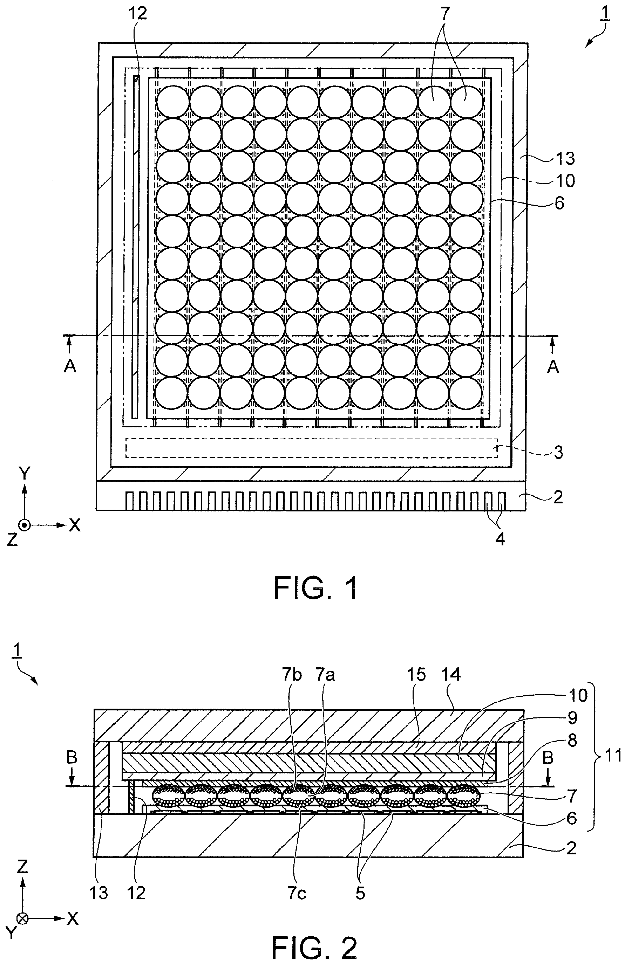

The electrophoretic display device according to the first embodiment will be described with reference to Fig. 1 through Fig. 6. Fig. 1 is a schematic horizontal cross-sectional view showing a structure of the electrophoretic display device, and Fig. 2 is a schematic side cross-sectional view showing the structure of the electrophoretic display device. Fig. 1 is a cross-sectional view along the line B-B shown in Fig. 2, and Fig. 2 is a cross-sectional view along the line A-A shown in Fig. 1.

As shown in Fig. 1 and Fig. 2, the electrophoretic display device 1 as a display device is provided with an element substrate 2 as a substrate. On the element substrate 2, there are installed switching elements not shown such as TFTs (thin film transistors) in a matrix. Further, on the element substrate 2, there is installed a drive circuit 3 for driving the switching elements. Further, terminals 4 are installed so as to be arranged along a side of the element substrate 2, and on the terminals 4, there is installed a flexible cable not shown. Further, control signals and data signals for controlling the electrophoretic display device 1 are transmitted from an external device via the flexible cable.

The element substrate 2 is provided with a base member, and on the base member, there are installed the switching elements and interconnections. The base member is a plate-like member having a thickness in a range of, for example, 30 µm through 500 µm. As the constituent material of the base member, there can be cited an inorganic substrate such as a grass substrate, a quartz substrate, a silicon substrate, or a gallium arsenide substrate, a plastic substrate formed of polyimide, polyethylene terephthalate (PET), polyethylene naphthalate (PEN), polymethylmethacrylate (PMMA), polycarbonate (PC), polyethersulfone (PES), aromatic polyester (liquid crystal polymer), or the like, and so on. In the present embodiment, for example, a glass substrate is used as a material of the base member.

On the element substrate 2, there are installed pixel electrodes 5 at places respectively opposed to the switching elements. The pixel electrodes 5 are disposed in a matrix similarly to the switching elements.

The thickness direction of the element substrate 2 is defined as a Z direction, and directions in which the pixel electrodes 5 are arranged are defined as an X direction and a Y direction, respectively. The X direction and the Y direction are directions in which two sides of the element substrate 2 extend, respectively. Further, the drive circuit 3 is located on the -Y direction side of the element substrate 2, and has a shape elongated in the X direction.

On the element electrodes 5, there is installed a first adhesive film 6 as an adhesive film, and on the first adhesive film 6, there are installed microcapsules 7. The shape of the microcapsule 7 viewed from the Z direction is circular, and the diameter of the microcapsule 7 is in a range of 30 µm through 100 µm. The shape of the microcapsule 7 viewed from the X direction and the shape of the microcapsule 7 viewed from the Y direction are each a roughly circular shape. The microcapsule 7 is a sealed container, and a dispersion medium 7a, black particles 7b, and white particles 7c are encapsulated in each of the microcapsules 7. One of the black particles 7b and the white particles 7c is positively charged, and the other is negatively charged.

As the dispersion medium 7a, there can be used water, an alcoholic solvent, a variety of types of esters, ketones, aliphatic hydrocarbons, alicyclic hydrocarbons, aromatic hydrocarbons, halogenated hydrocarbons, carboxylic salts, other various types of oils, or the like. Further, as the dispersion medium 7a, it is possible to use any one of these materials alone, or in addition, it is also possible to use a mixture of some of these materials added with a surfactant or the like.

As the black particles 7b, there can be used particles, polymers, or colloids made of a black pigment such as carbon black, aniline black, or a titanium oxynitride. As the white particles 7c, there can be used a white pigment such as a titanium dioxide. A charge control agent composed of particles of electrolyte, surface active agent, metal soap, resin, rubber, oil, varnish, compound, and so on, a dispersion agent such as a titanate coupling agent, an aluminate coupling agent, or a silane coupling agent, a lubricant agent, a stabilization agent and so on can be added to these pigments if necessary. By adding these additive agents, it is possible to move the black particles 7b and white particles 7c in good response, and to make the black particles 7b and white particles 7c operate stably for a long period of time.

Besides the black particles 7b and the white particles 7c, it is possible to use either one or two or more of an azo pigment such as a monoazo pigment, a yellow pigment such as isoindolinone, a red pigment such as quinacridone red, a blue pigment such as phthalocyanine blue, a green pigment such as phthalocyanine green and so on.

In the drawings, the pixel electrodes 5 and the microcapsules 7 are disposed so as to be respectively opposed to each other in order to make the drawings eye-friendly. It is not required for the pixel electrodes 5 and the microcapsules 7 to be opposed one-to-one to each other. It is also possible for the microcapsules 7 to be irregularly arranged with respect to the pixel electrodes 5. In the case in which the microcapsules 7 are smaller in size, and therefor larger in number, than the pixel electrodes 5, it is possible to draw a smoother line compared to the case in which the microcapsules 7 are larger in size, and therefor smaller in number, than the pixel electrodes 5.

On the microcapsules 7, there are installed a second adhesive film 8, a common electrode 9, and a transparent substrate 10 stacked on one another in this order. Further, the first adhesive film 6, the microcapsules 7, the second adhesive film 8, the common electrode 9, and the transparent substrate 10 constitute an electrophoretic sheet 11. The material of the pixel electrodes 5 is not particularly limited providing the material has electrical conductivity, and it is also possible to use a material obtained by stacking a nickel film or a gold film on a copper foil and a material obtained by stacking a nickel film or a gold film on an aluminum foil besides copper, aluminum, nickel, gold, silver, and ITO (indium tin oxide). In the present embodiment, for example, the pixel electrode 5 has a structure in which a gold film is installed on an interconnection obtained by stacking aluminum and copper on one another.

The common electrode 9 is only required to be a transparent conductive film, and is not particularly limited. For example, as the common electrode 9, there can be used MgAg, IGO (indium-gallium oxide), ITO (indium tin oxide), ICO (indium-cerium oxide), IZO (indium zinc oxide), and so on. In the present embodiment, for example, ITO is used as the common electrode 9.

The material of the transparent substrate 10 is only required to have a light transmissive property, strength, and an insulating property, and is not particularly limited. As the material of the transparent substrate 10, there can be used a material high in light transmissive property such as glass, acrylic resin, polyethylene terephthalate (PET), polyethersulfone (PES), or polycarbonate (PC). It is also possible to dispose a moisture-proof film not shown or the like on a surface on the +Z direction side of the transparent substrate 10.

The material of the first adhesive film 6, the second adhesive film 8, and a third adhesive film 15 is only required to be a material capable of bonding the members, which sandwich the material, and provided with an insulating property, and is not particularly limited. For example, as the material of the first adhesive film 6, the second adhesive film 8, and the third adhesive film 15, there can be used polyurethane, polyurea, polyurea-polyurethane, urea-formaldehyde resin, melamine-formaldehyde resin, polyamide, polyester, polysulfone amide, and so on. Besides the above, as the material of the first adhesive film 6, the second adhesive film 8, and the third adhesive film 15, there can also be used, for example, polycarbonate, polysulfinate, epoxy resin, acrylic resin such as polyacrylic acid ester, polymethacrylic acid ester, polyvinyl acetate, gelatin, phenol resin, and polyvinyl resin. In the present embodiment, for example, as the material of the first adhesive film 6, the second adhesive film 8, and the third adhesive film 15, there is used ultraviolet curable acrylic resin or ultraviolet curable epoxy resin.

The common electrode 9 and the transparent substrate 10 protrude in the -X direction from the first adhesive film 6 and the second adhesive film 8. Further, in the place where the common electrode 9 and the transparent substrate 10 protrude, a conduction part 12 is installed between the element substrate 2 and the common electrode 9. Due to the conduction part 12, a voltage is applied to the common electrode 9.

On the element substrate 2, there is installed a frame part 13 so as to surround the electrophoretic sheet 11, and on the +Z direction side of the frame part 13, there is disposed a protective substrate 14. Further, the electrophoretic sheet 11 and the protective substrate 14 are bonded to each other with the third adhesive film 15. The frame part 13 is located on the outer side of the electrophoretic sheet 11, and is disposed on the element substrate 2. The frame part 13 is sandwiched by the protective substrate 14 and the element substrate 2. The frame part 13 is formed of an organic material such as acrylic resin or PET. The frame part 13 is in the state of adhering to the peripheral part of each of the protective substrate 14 and the element substrate 2, and at the same time fixing each of the peripheral parts. These members can also be fixed to each other with laser welding, or can also be fixed with an adhesive.

The protective substrate 14 is disposed on the visible side of the electrophoretic display device 1. As the plate member of the protective substrate 14, a material high in light transmissive property, excellent in flatness, and hard to be scratched is suitable, and an acrylic plate member, tempered glass, and so on can be used. It is preferable to use an optical adhesive high in transparency as the second adhesive film 8 and the third adhesive film 15.

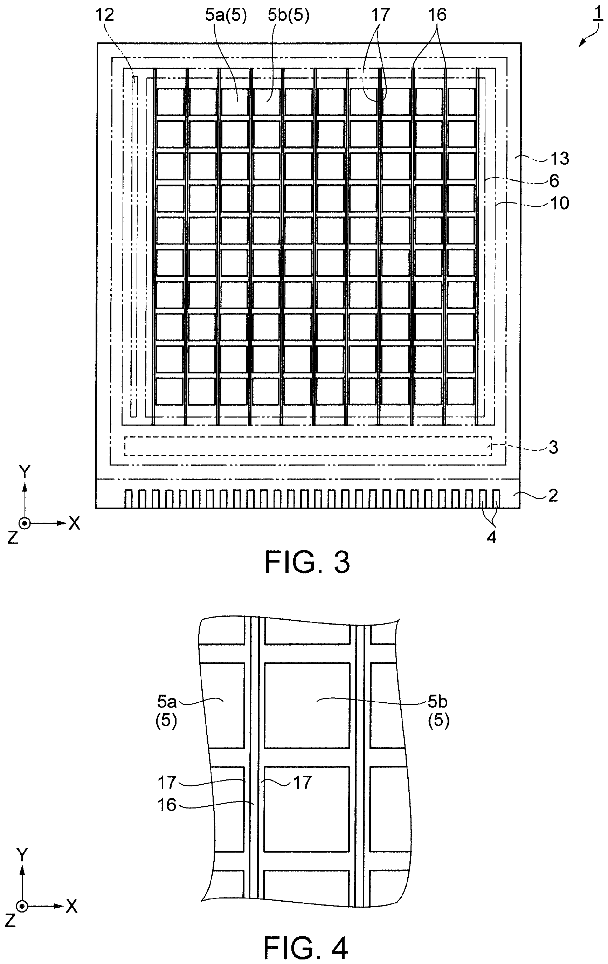

Fig. 3 is a schematic plan view showing a structure of the element substrate, and is a diagram obtained by removing the microcapsules 7 and the first adhesive film 6 from Fig. 1. Fig. 4 is a schematic plan view showing a principal part of the structure of the element substrate. In Fig. 3 and Fig. 4, the pixel electrode 5 in one of the rows of the pixel electrodes 5 arranged in the Y direction is defined as a first pixel electrode 5a. Further, the pixel electrode 5 located adjacent to the first pixel electrode 5a is defined as a second pixel electrode 5b.

In this case, between the first pixel electrode 5a and the second electrode 5b, there is installed a protruding part 16 extending in the Y direction. The protruding part 16 extends to the periphery of the first adhesive film 6. The protruding part 16 is located between the pixel electrodes 5 in each of the rows. Further, the protruding part 16 is also located on the +X direction side of the pixel electrode 5 in the end column on the +X direction side. Further, the protruding part 16 is also located on the -X direction side of the pixel electrode 5 in the end column on the -X direction side. The both sides of each of the protruding parts 16 in the X direction are used as passages 17 through which the air as a gas passes. The passage 17 is disposed along the protruding part 16, and opens in the periphery of the first adhesive film 6.

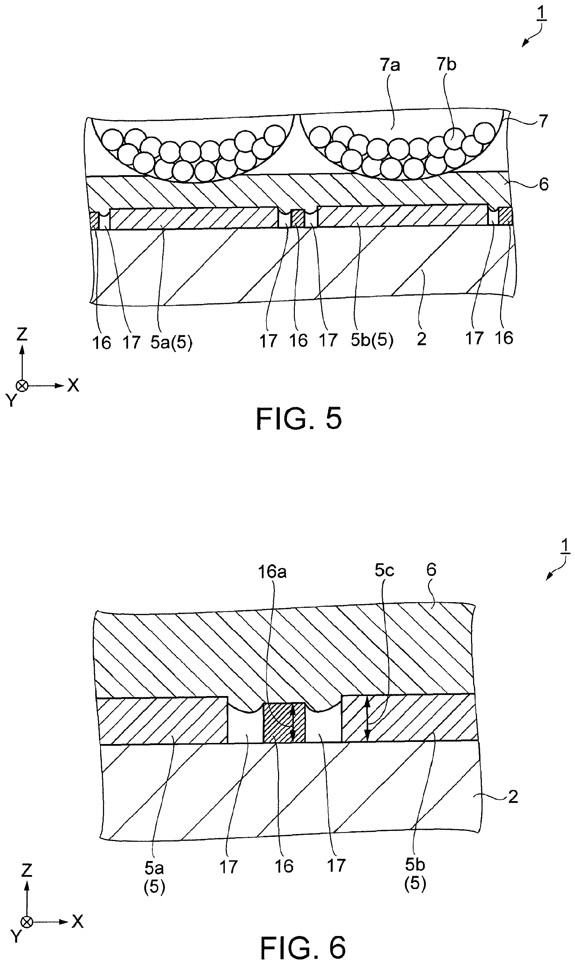

Fig. 5 and Fig. 6 are each a schematic side cross-sectional view showing a principal part of a structure of the pixel electrodes and the protruding parts. As shown in Fig. 5 and Fig. 6, the first adhesive film 6 is installed on the pixel electrodes 5 and the protruding parts 16. In the case in which the protruding part 16 does not exist between the first pixel electrode 5a and the second pixel electrode 5b, the first adhesive film 6 sags toward the element substrate 2, and a space between the first pixel electrode 5a and the second pixel electrode 5b is filled with the first adhesive film 6. Therefore, a space through which the air passes is eliminated between the first pixel electrode 5a and the second pixel electrode 5b.

The distance between the first pixel electrode 5a and the protruding part 16 is short compared to the distance in the X direction between the first pixel electrode 5a and the second pixel electrode 5b. Therefore, it becomes hard for the first adhesive film 6 to sag toward the element substrate 2 between the first pixel electrode 5a and the protruding part 16. Further, the passage 17 through which the air passes is formed between the first pixel electrode 5a and the protruding part 16. Similarly, the distance between the second pixel electrode 5b and the protruding part 16 is short compared to the distance between the first pixel electrode 5a and the second pixel electrode 5b. Therefore, it becomes hard for the first adhesive film 6 to sag toward the element substrate 2 between the second pixel electrode 5b and the protruding part 16. Further, the passage 17 through which the air passes is also formed between the second pixel electrode 5b and the protruding part 16.

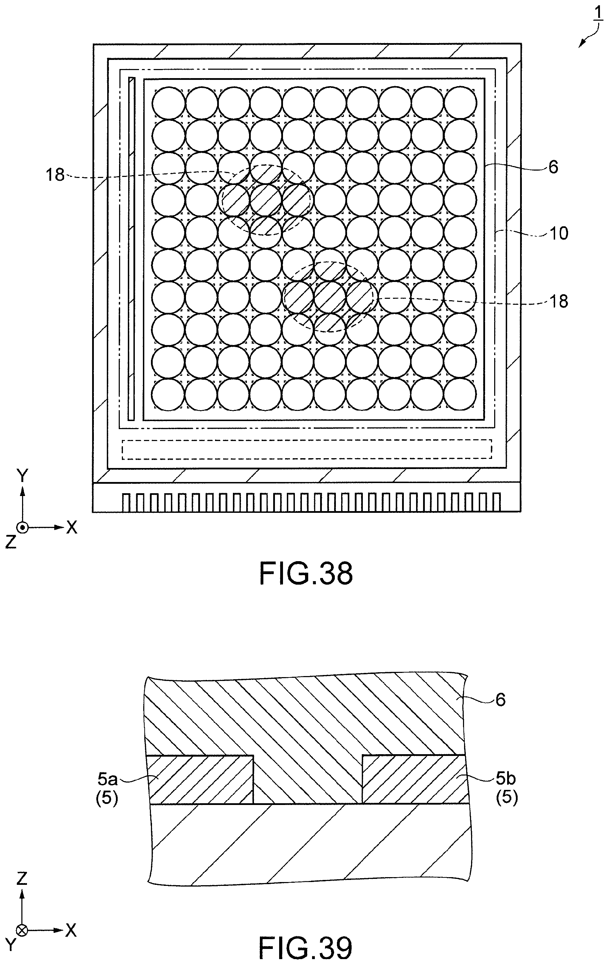

Fig. 38 is a schematic horizontal cross-sectional view showing a structure of an electrophoretic display device according to a comparative example. As shown in Fig. 38, when installing the first adhesive film 6 on the element substrate 2, bubbles 18 remain between the pixel electrode 6 and the first adhesive film 6 in some cases. In this case, since the light is reflected between the first adhesive film 6 and the bubble, it becomes difficult to observe the display pattern. The electrophoretic display device 1 has the passages 17 between the first pixel electrode 5a and the second pixel electrode 5b, and the passages 17 open in the periphery of the first adhesive film 6. Therefore, in the case in which the bubbles 18 remain between the pixel electrodes 5 and the first adhesive film 6, the electrode substrate 2 and the electrophoretic sheet 11 are pressed. Then, by applying pressure to the bubbles 18, it is possible to make the gas in the bubbles pass through the passages 17 to move to the periphery of the first adhesive film 6. As a result, it is possible to easily make the electrophoretic display device 1 hard for the bubbles 18 to exist between the pixel electrodes 5 and the first adhesive film 6.

Fig. 39 is a schematic side cross-sectional view showing a principal part of a structure of the pixel electrode in the comparative example. As shown in Fig. 39, when the pressure is applied to the first adhesive film 6, the first adhesive film 6 deforms. In the case in which the protruding part 16 does not exist between the first pixel electrode 5a and the second pixel electrode 5b, the first adhesive film 6 enters the space between the first pixel electrode 5a and the second pixel electrode 5b. Thus, since the space is not created between the first pixel electrode 5a and the second pixel electrode 5b, the passages 17 are not formed.

Going back to Fig. 5 and Fig. 6, in the electrophoretic display device 1, the protruding part 16 is installed between the element substrate 2 and the first adhesive film 6, and the protruding part 16 is installed along the passages 17. The protruding part 16 forms a space between the element substrate 2 and the first adhesive film 6. Further, even in the case in which the electrophoretic display device 1 is pressed in the thickness direction of the element substrate 2, the protruding part 16 prevents the passages 17 from crushing. Therefore, even in the case in which the electrophoretic display device 1 is pressed in the thickness direction of the element substrate 2, the passages 17 can be maintained.

The height in the Z direction of the pixel electrodes 5 is defined as an electrode height 5c. Further, the height in the Z direction of the protruding part 16 is defined as a protruding part height 16a. The protruding part height 16a is set to the height equal to or lower than the electrode height 5c. If the protruding part height 16a is higher than the electrode height 5c, there is a possibility that the pixel electrodes 5 and the first adhesive film 6 become separated from each other. On this occasion, since the bubbles 18 occur between the pixel electrodes 5 and the first adhesive film 6, it becomes difficult to observe the display pattern. Since the protruding part height 16a is lower than the electrode height 5c in the electrophoretic display device 1, it is possible to prevent the pixel electrodes 5 and the first adhesive film 6 from becoming separated from each other. As a result, it is possible to prevent the bubbles 18 from being generated between the pixel electrodes 5 and the first adhesive film 6.

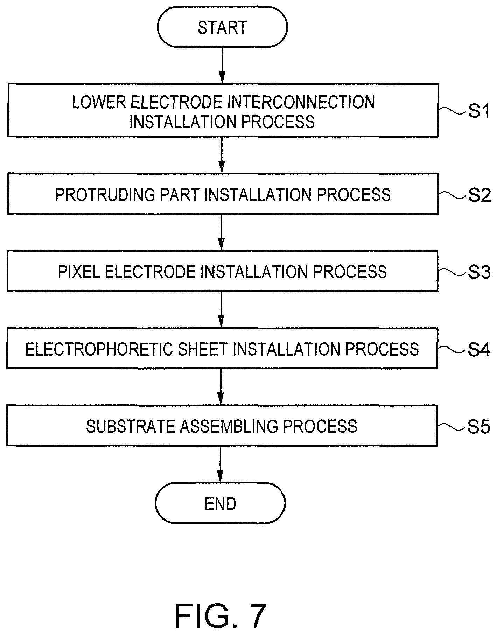

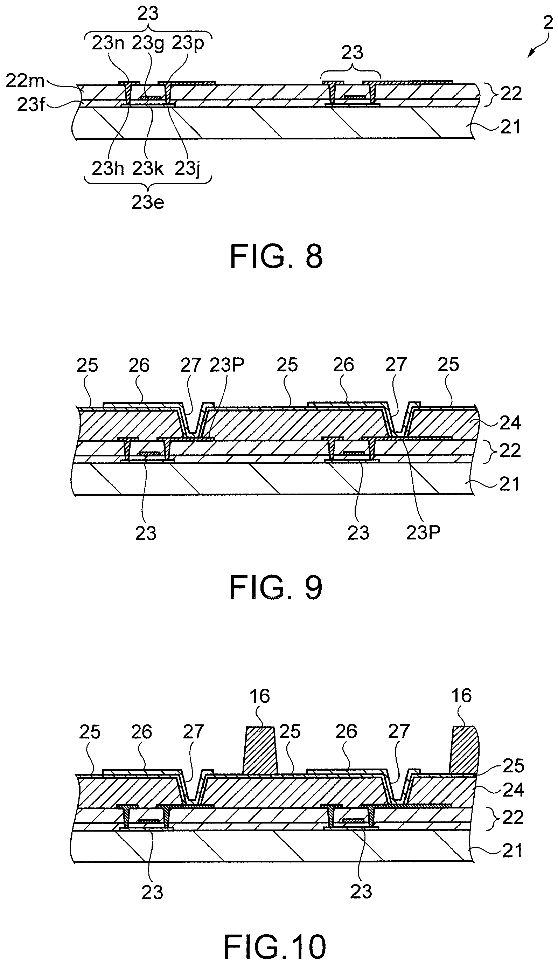

Then, a method of manufacturing the electrophoretic display device 1 described above will be described with reference to Fig. 7 through Fig. 15. Fig. 7 is a flowchart of the method of manufacturing the electrophoretic display device, and Fig. 8 through Fig. 15 are schematic side cross-sectional views for explaining the method of manufacturing the electrophoretic display device. In the flowchart shown in Fig. 7, the step S1 corresponds to a lower electrode interconnection installation process. This process is a process for installing the interconnections communicating from the element substrate 2 to the pixel electrodes 5. Then, the process proceeds to the step S2. The step S2 corresponds to a protruding part installation process. This process is a process for installing the protruding parts 16 on the element substrate 2. Then, the process proceeds to the step S3. The step S3 corresponds to a pixel electrode installation process. This process is a process for installing the pixel electrodes 5 on the element substrate 2. Then, the process proceeds to step S4. The step S4 corresponds to an electrophoretic sheet installation process. This process is a process for installing the electrophoretic sheet 11 on the element substrate 2. Then, the process proceeds to the step S5. The step S5 corresponds to a substrate assembling process. This process is a process for assembling the element substrate 2 and the protective substrate 14 with each other. Due to the processes described hereinabove, the electrophoretic display device 1 is completed.

Then, the manufacturing method will be described in detail in association with the steps shown in Fig. 7 using Fig. 8 through Fig. 15.

Fig. 8 and Fig. 9 are diagrams corresponding to the lower electrode interconnection installation process in the step S1. As shown in Fig. 8, a base member 21 is prepared. As the base member 21, there is used a plate obtained by grinding and then polishing a glass plate to have a predetermined thickness and to reduce the surface roughness. An element layer 22 is formed on the base member 21. Since the method of forming the element layer 22 is known to the public, the detailed description will be omitted, and an outline of the manufacturing method will be described. There is a plurality of methods of forming the element layer 22, and the method of forming the element layer 22 is not particularly limited.

Firstly, a foundation insulating film made of SiO₂ not shown is formed on the base member 21 using a CVD (chemical vapor deposition) method. Then, an amorphous silicon film with a film thickness of about 50 nm is formed on the foundation insulating film using the CVD method or the like. The amorphous silicon film is crystallized using a laser crystallization method or the like to form a polycrystalline silicon film. Subsequently, semiconductor films 23e as the island shaped polycrystalline silicon films are formed using a photolithography method and so on.

Subsequently, an SiO₂ film with a film thickness of about 100 nm is formed using the CVD method or the like so as to cover the semiconductor films 23e and the foundation insulating film as a gate insulating film 23f. An Mo film with a film thickness of about 500 nm is formed on the gate insulating film 23f using a sputtering method or the like, and then island shaped gate electrodes 23g are formed using a photolithography method. Impurity ions are injected into the semiconductor film using an ion injection method to form source regions 23h, drain regions 23j, and channel forming regions 23k. An SiO₂ film with a film thickness of about 800 nm is formed so as to cover the gate insulating film 23f and the gate electrodes 23g as an interlayer insulating film 22m.

Then, contact holes reaching the source regions 23h and contact holes reaching the drain regions 23j are formed in the interlayer insulating film 22m. Subsequently, an Mo film with a film thickness of about 500 nm is formed on the interlayer insulating film 22m and the contact holes and in the contact holes using the sputtering method or the like, and then the Mo film is patterned using the photolithography method to form source electrodes 23n, drain electrodes 23p, and interconnections not shown. The semiconductor film 23e, the gate insulating film 23f, the gate electrode 23g, the source electrode 23n, the drain electrode 23p, and so on constitute the switching element 23.

As shown in Fig. 9, a first insulating film 24 is installed so as to cover the interlayer insulating film 22m, the source electrodes 23n, the drain electrodes 23p, and the interconnections. The first insulating film 24 is a resin film made of acrylic resin or the like. A solution having the resin dissolved is applied on the element layer 22 with a spinner or a roll coater, and is then dried. Then, the first insulating film 24 is patterned using the photolithography method to form contact holes in the first insulating film 24. The contact holes in the first insulating film 24 are each a hole reaching the drain electrode 23p. Then, an Si₃N₄ film with a film thickness of about 800 nm is formed on the first insulating film 24 as the second insulating film 25. Then, the second insulating film 25 is patterned using the photolithography method to expose the drain electrodes 23p on the respective contact holes. It should be noted that it is also possible to install a protective film before forming the first insulating film 24. As the material of the protective film, it is possible to use, for example, silicon nitride or the like. Thus, even in the case in which a movable ion and so on exist in the first insulating film 24, it is possible to prevent the movable ion from entering the interlayer insulating film 22m, the source electrodes 23n, the drain electrodes 23p, or the interconnections. Thus, it is possible to prevent the characteristics of the element from changing.

Then, an AlCu film with a film thickness of about 500 nm is formed on the second insulating film 25 and in the contact holes using a deposition method such as a sputtering method. Subsequently, the AlCu film is etched to form pixel electrode interconnections 26 and through electrodes 27. The through electrodes 27 are each an electrode installed in the contact hole, and each connect the drain electrode 23p and the pixel electrode interconnection 26 to each other. The etching method is not particularly limited, but in the present embodiment, a wet etching method is used.

Between the first insulating film 24 and the pixel electrode interconnections 26, there is installed the second insulating film 25. The first insulating film 24 is formed of a resin film, and the pixel electrode interconnections 26 are formed of a metal film. If a metal film is installed on a resin film, the metal film becomes easy to separate. The second insulating film 25 is a mineral film, and the mineral film does not easily separates if the mineral film is bonded to a resin film and a metal film. Therefore, by installing the second insulating film 25, the pixel electrode interconnections 26 can be prevented from separating.

Fig. 10 is a diagram corresponding to the protruding part installation process in the step S2. As shown in Fig. 10, in the step S2, the protruding parts 16 are installed on the second insulating film 25. The material of the protruding parts 16 is only required to have rigidity, and is not particularly limited. In the present embodiment, acrylic resin is used as the material of the protruding parts 16. Firstly, a solution having the resin dissolved is applied on the second insulating film 25 with a spinner, a roll coater, or a variety of printing methods, and is then dried. Then, the resin film is patterned using a photolithography method to install the protruding parts 16.

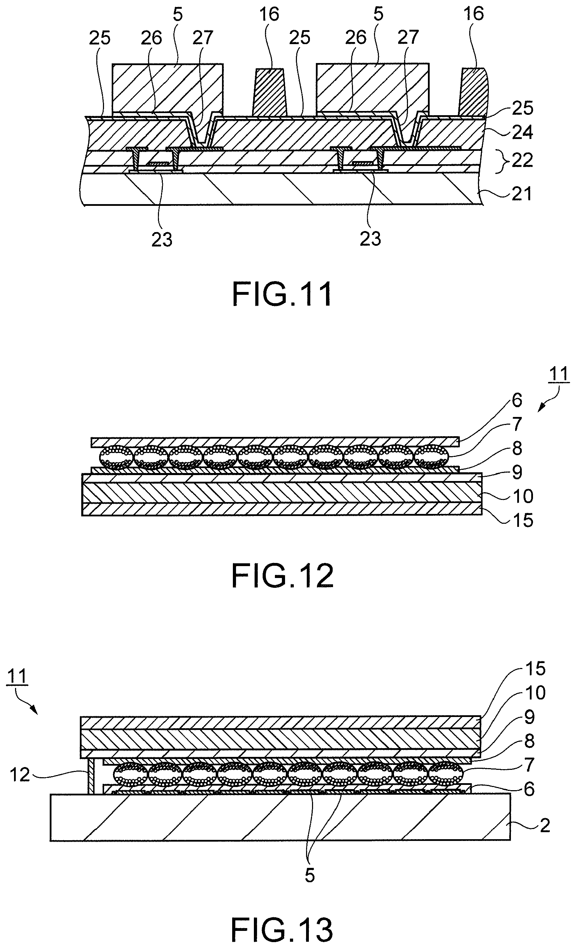

Fig. 11 is a diagram corresponding to the pixel electrode installation process in the step S3. As shown in Fig. 11, the pixel electrodes 5 are installed so as to overlap the pixel electrode interconnections 26 and the through electrodes 27. The pixel electrodes 5 are formed using a non-electrolytic plating method. The material of the pixel electrodes 5 is only required to have electrical conductivity for the plating to be formed using the non-electrolytic plating method, and is not particularly limited. Metal such as gold, palladium, or nickel can be used alone or a plurality of such metals stacked on one another can also be used. In the present embodiment, for example, gold is used as the material of the pixel electrodes 5. It should be noted that a protective film can also be formed on the lower surface of the base member 21. As the material of the protective film, silicon nitride or the like can be used.

Fig. 12 through Fig. 14 are diagrams corresponding to the electrophoretic sheet installation process in the step S4. As shown in Fig. 12, in the step S4, the electrophoretic sheet 11 is prepared. Firstly, the common electrode 9 is installed on one surface of the transparent substrate 10. The common electrode 9 is formed of an ITO film. The ITO film with a film thickness of about 100 nm is formed on the transparent substrate 10 using a deposition method such as a sputtering method. Then, the ITO film is patterned using a photolithography method to form the common electrode 9.

Then, the second adhesive film 8 is installed so as to overlap the common electrode 9. By applying an adhesive to a second mounting not shown, and then drying the adhesive, the second adhesive film 8 is formed. Then, the second mounting on which the second adhesive film 8 is installed is installed on the common electrode 9. Then, in the transparent substrate 10, the third adhesive film 15 is installed on a surface on the opposite side to the surface on which the second adhesive film 8 is installed. Similarly to the second adhesive film 8, by applying an adhesive to a third mounting not shown, and then drying the adhesive, the third adhesive film 15 is formed. Then, the third mounting on which the third adhesive film 15 is installed is installed on the transparent substrate 10. It should be noted that the second adhesive film 8 and the third adhesive film 15 are not completely dried, but are dried in such an extent that the adherence property remains.

Subsequently, the second mounting is removed to expose the second adhesive film 8, and then the microcapsules 7 are installed on the second adhesive film 8. The microcapsules 7 are sprinkled over the second adhesive film 8 to be attached to the second adhesive film 8. Then, the superfluous microcapsules 7 having failed to adhere to the second adhesive film 8 are removed. Then, the microcapsules 7 are finely moved by a predetermined jig to be arrayed.

Then, the first adhesive film 6 is installed so as to overlap the microcapsules 7 thus arrayed. Similarly to the second adhesive film 8, by applying an adhesive to a first mounting not shown, and then drying the adhesive, the first adhesive film 6 is formed. Then, the first mounting on which the first adhesive film 6 is installed is installed on the microcapsules 7 thus arrayed.

As shown in Fig. 13, the conduction part 12 is installed on the element substrate 2. As the conduction part 12, there can be used a member having electrical conductivity such as a conductive paste, conductive rubber, or a metal piece. The first mounting is removed from the first adhesive film 6 to expose the first adhesive film 6. Then, the first adhesive film 6 is made to have contact with the pixel electrodes 5. The first adhesive film 6 is heated to be dried to solidify the first adhesive film 6. Thus, the element substrate 2 and the electrophoretic sheet 11 are bonded to each other.

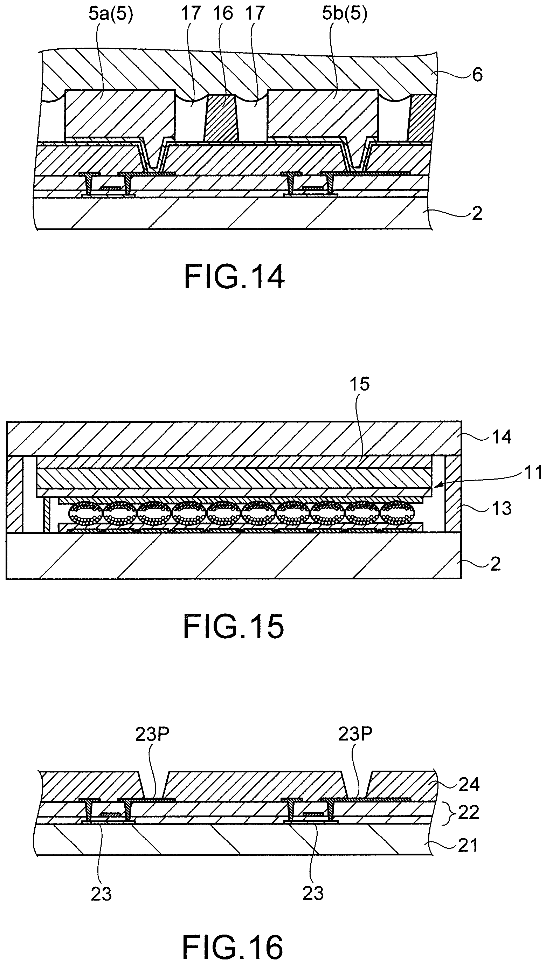

As shown in Fig. 14, the pixel electrodes 5 in the respective columns adjacent to each other are defined as the first pixel electrode 5a and the second pixel electrode 5b. The protruding part 16 is installed between the first pixel electrode 5a and the second pixel electrode 5b, and the protruding part 16 is arranged to have a height lower than the pixel electrodes 5. Then, when pressurizing the electrophoretic sheet 11 and the element substrate 2 to each other, since the first adhesive film 6 has contact with the protruding part 16, the first adhesive film 6 does not sag toward the element substrate 2. Therefore, between the first pixel electrode 5a and the second pixel electrode 5b, there are formed the passages 17 through which the air passes.

In some cases, bubbles are generated between the pixel electrodes 5 and the first adhesive film 6. When the first adhesive film 6 is pressed against the pixel electrodes 5, the air in the bubbles flows out to the passages 17. Then, the air is discharged from the periphery of the first adhesive film 6 through the passages 17. As a result, it is possible to eliminate the bubbles in an area between the pixel electrodes 5 and the first adhesive film 6.

Fig. 15 is a diagram corresponding to the substrate assembling process in the step S5. As shown in Fig. 15, the frame part 13 is installed on the element substrate 2. Then, the third mounting is removed from the electrophoretic sheet 11 to expose the third adhesive film 15. Then, the protective substrate 14 is installed so as to overlap the third adhesive film 15. Subsequently, the third adhesive film 15 is heated to be dried to thereby be solidified, and thus, the electrophoretic sheet 11 and the protective substrate 14 are bonded to each other.

As described above, according to the present embodiment, the following advantages are obtained.
(1) According to the present embodiment, between the first pixel electrode 5a and the second pixel electrode 5b, there are installed the passages 17, which open in the periphery of the first adhesive film 6, and through which a gas passes. When installing the first adhesive film 6 on the element substrate 2, the bubbles 18 remain between the element substrate 2 and the first adhesive film 6 in some cases. In this case, since the light is reflected between the first adhesive film 6 and the bubbles 18, it becomes difficult to observe the display pattern. The electrophoretic display device 1 has the passages 17 between the first pixel electrode 5a and the second pixel electrode 5b, and the passages 17 open in the periphery of the first adhesive film 6. Therefore, in the case in which the bubbles 18 remain between the element substrate 2 and the first adhesive film 6, by applying pressure to the bubbles 18, it is possible to make the gas in the bubbles 18 pass through the passages 17 to move to the periphery of the first adhesive film 6. As a result, it is possible to easily achieve the electrophoretic display device 1 in which the bubbles 18 is removed between the pixel electrodes 5 and the first adhesive film 6.
(2) According to the present embodiment, the protruding part 16 is disposed between the element substrate 2 and the first adhesive film 6, and the protruding part 16 is disposed along the passages 17. The protruding part 16 forms a space between the element substrate 2 and the first adhesive film 6. Further, even in the case in which the electrophoretic display device 1 is pressed in the thickness direction of the element substrate 2, the protruding part 16 prevents the space from crushing. Therefore, even in the case in which the electrophoretic display device 1 is pressed in the thickness direction of the element substrate 2, the passages 17 can be maintained.
(3) According to the present embodiment, The protruding part height 16a is set to be equal to or lower than the electrode height 5c. If the protruding part height 16a is higher than the electrode height 5c, there is a possibility that the pixel electrodes 5 and the first adhesive film 6 become separated from each other. On this occasion, since the bubbles 18 occur between the pixel electrodes 5 and the first adhesive film 6, it becomes difficult to observe the display pattern. Since the protruding part height 16a is lower than the electrode height 5c in the electrophoretic display device 1, it is possible to prevent the pixel electrodes 5 and the first adhesive film 6 from becoming separated from each other. As a result, it is possible to prevent the bubbles 18 from being generated between the pixel electrodes 5 and the first adhesive film 6.

### Second Embodiment

Then, an embodiment of manufacturing the electrophoretic display device will be described using schematic side cross-sectional views for explaining the method of manufacturing the electrophoretic display device shown in Fig. 16 through Fig. 19. The present embodiment is different from the first embodiment in the point that the pixel electrode interconnections 26 are installed after installing the protruding parts 16. It should be noted that the description of the same point as in the first embodiment will be omitted. It should be noted that substantially the same protective film as in the first embodiment can also be disposed.

Fig. 16 is a diagram corresponding to the process of installing the first insulating film. Specifically, in the present embodiment, as shown in Fig. 16, the first insulating film 24 is disposed so as to cover the interlayer insulating film 22m, the source electrodes 23n, the drain electrodes 23p, and the interconnections, and then the contact holes are formed in the first insulating film 24. The drain electrodes 23p are exposed on the respective contact holes. The installation method of the first insulating film 24 is the same as in the first embodiment, and the description thereof will be omitted.

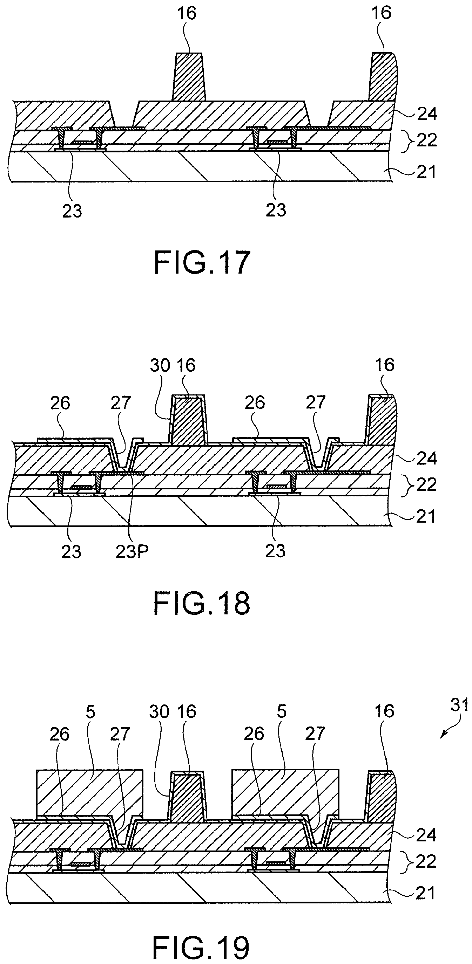

Fig. 17 is a diagram corresponding to the protruding part installation process. As shown in Fig. 17, in the step S2, the protruding parts 16 are installed on the first insulating film 24. The installation method of the protruding parts 16 is the same as in the first embodiment, and the description thereof will be omitted.

Fig. 18 is a diagram corresponding to the lower electrode interconnection installation process. As shown in Fig. 18, an Si₃N₄ film with a film thickness of about 800 nm is formed on the first insulating film 24 and the protruding parts 16 as the second insulating film 30. Then, the second insulating film 30 is patterned using the photolithography method to expose the drain electrodes 23p on the respective contact holes. The installation method of the second insulating film 30 is the same as the installation method of the second insulating film 25 in the first embodiment, and the description thereof will be omitted.

Then, an AlCu film is formed on the second insulating film 30 and in each of the contact holes. Subsequently, the AlCu film is etched to form the pixel electrode interconnections 26 and the through electrodes 27. The installation method of the pixel electrode interconnections 26 and the through electrodes 27 is the same as the installation method of the pixel electrode interconnections 26 and the through electrodes 27 in the first embodiment, and the description thereof will be omitted.

Fig. 19 is a diagram corresponding to the pixel electrode installation process. As shown in Fig. 19, the pixel electrodes 5 are installed so as to overlap the pixel electrode interconnections 26 and the through electrodes 27. The installation method of the pixel electrodes 5 is the same as in the first embodiment, and the description thereof will be omitted. The electrophoretic sheet installation process in the step S4 and the substrate assembling process in the step S5 to be subsequently performed are the same as in the first embodiment, and the description will be omitted. Due to the processes described hereinabove, the electrophoretic display device 31 is completed. In the electrophoretic display device 31, similarly to the first embodiment, it is possible to prevent the bubbles 18 from being generated between the pixel electrodes 5 and the first adhesive film 6.

### Third Embodiment

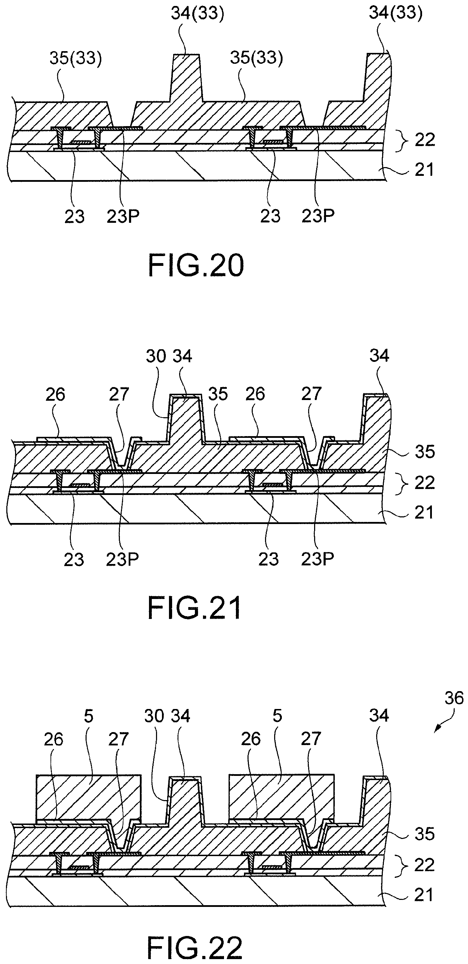

Then, an embodiment of manufacturing the electrophoretic display device will be described using schematic side cross-sectional views for explaining the method of manufacturing the electrophoretic display device shown in Fig. 20 through Fig. 22. The present embodiment is different from the second embodiment in the point that the protruding parts 16 and the first insulating film 24 are integrally installed. It should be noted that the description of the same point as in the first and second embodiments will be omitted. It should be noted that substantially the same protective film as in the first embodiment can also be disposed.

Fig. 20 is a diagram corresponding to the process of installing the first insulating film and the protruding parts. Specifically, in the present embodiment, as shown in Fig. 20, a resin film 33 is installed so as to cover the element layer 22. Firstly, a solution having the resin dissolved is applied on the element layer 22 with a spinner, a roll coater, or a variety of printing methods, and is then dried. Then, the resin film is patterned using a photolithography method to form the protruding parts 34 and the first insulating film 35. The material of the resin film 33 is not particularly limited, but in the present embodiment, acrylic resin, for example, is used. The protruding parts 34 are substantially the same regions as the protruding parts 16 in the first embodiment, and the first insulating film 35 is substantially the same region as the first insulating film 24 in the first embodiment.

Then, the first insulating film 35 is patterned using the photolithography method to form the contact holes in the first insulating film 35. The drain electrodes 23p are exposed on the respective contact holes. The installation method of the contact holes is the same as in the first embodiment, and the description thereof will be omitted.

Fig. 21 is a diagram corresponding to the lower electrode interconnection installation process. As shown in Fig. 21, an Si₃N₄ film with a film thickness of about 800 nm is formed on the first insulating film 35 and the protruding parts 34 as the second insulating film 30. Then, the second insulating film 30 is patterned using the photolithography method to expose the drain electrodes 23p on the respective contact holes. The installation method of the second insulating film 30 is the same as the installation method of the second insulating film 25 in the first embodiment, and the description thereof will be omitted.

Then, an AlCu film is formed on the second insulating film 30 and in each of the contact holes. Subsequently, the AlCu film is etched to form the pixel electrode interconnections 26 and the through electrodes 27. The installation method of the pixel electrode interconnections 26 and the through electrodes 27 is the same as the installation method of the pixel electrode interconnections 26 and the through electrodes 27 in the first embodiment, and the description thereof will be omitted.

Fig. 22 is a diagram corresponding to the pixel electrode installation process. As shown in Fig. 22, the pixel electrodes 5 are installed so as to overlap the pixel electrode interconnections 26 and the through electrodes 27. The installation method of the pixel electrodes 5 is the same as in the first embodiment, and the description thereof will be omitted. The electrophoretic sheet installation process in the step S4 and the substrate assembling process in the step S5 to be subsequently performed are the same as in the first embodiment, and the description will be omitted. Due to the processes described hereinabove, the electrophoretic display device 36 is completed.

As described above, according to the present embodiment, the following advantage is obtained.
(1) According to the present embodiment, the first insulating film 35 and the protruding parts 34 are formed of the same resin film 33. Therefore, it is possible to decrease the number of the processes of installing the resin film compared to the case of manufacturing the first insulating film 35 and the protruding parts 34 from respective resin films different from each other. As a result, the electrophoretic display device 36 can be manufactured with high productivity. In the electrophoretic display device 36, similarly to the first embodiment, it is possible to prevent the bubbles 18 from being generated between the pixel electrodes 5 and the first adhesive film 6.

### Fourth Embodiment

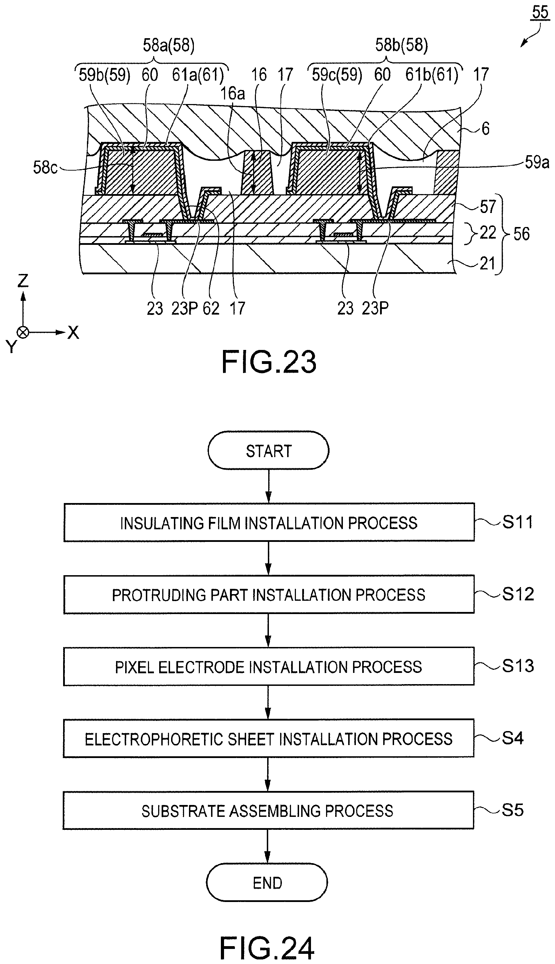

Then, an electrophoretic display device according to another embodiment of the invention will be described with reference to Fig. 23 through Fig. 28. The present embodiment is different from the first embodiment in the point that the pixel electrode has a structure in which a conductive film is installed on a base protruding part. It should be noted that the description of the same point as in the first embodiment will be omitted.

Fig. 23 is a schematic side cross-sectional view showing a principal part of the structure of the element substrate. As shown in Fig. 23, the electrophoretic display device 55 is provided with the element substrate 56, the element substrate 56 has a structure in which the base member 21, the element layer 22 and the first insulating film 57 are stacked on one another. The first insulating film 57 is a mineral insulating film, and is a film made of a silicon oxide or a silicon nitride. In the present embodiment, for example, the material of the first insulating film 57 is SiO₂. On the first insulating film 57 of the element substrate 56, there are installed the protruding parts 16 and the pixel electrodes 58. The protruding parts 16 are each installed between the pixel electrodes 58 adjacent in the X direction to each other. One of the pixel electrodes 58 adjacent in the X direction to each other is defined as a first pixel electrode 58a, and the other is defined as a second pixel electrode 58b. The first pixel electrode 58a and the second pixel electrode 58b have the same structure. Further, the pixel electrodes 58 are each constituted by the base protruding part 59, a second insulating film 60 installed so as to cover the base protruding part 59, and further an electrode film 61 as an electrically-conductive film for covering the second insulating film 60.

The base protruding part 59 in the first pixel electrode 58a is defined as a first base protruding part 59b, and the base protruding part 59 in the second pixel electrode 58b is defined as a second base protruding part 59c. The electrode film 61 installed on the first base protruding part 59b is defined as a first electrode film 61a, and the electrode film 61 installed on the second base protruding part 59c is defined as a second electrode film 61b. Contact holes are installed in the first insulating film 57, and in each of the contact holes, there is installed a through electrode 62 to be connected to the drain electrode 23p. Further, the through electrode 62 is connected to the electrode film 61.

Defining the height in the Z direction of the base protruding part 59 as a base protruding part height 59a, the protruding part height 16a and the base protruding part height 59a are equal to each other. Further, the height of the pixel electrodes 58 is defined as an electrode height 58c. In this case, the electrode height 58c is a height obtained by adding the thickness of the second insulating film 60 and the thickness of the electrode film 61 to the base protruding part height 59a. Therefore, since the electrode height 58c is surely higher than the protruding part height 16a, it is possible to make the bubbles 18 hard to occur on the pixel electrodes 58.

The protruding parts 16 and the base protruding parts 59 are made of the same material of resin. In the present embodiment, for example, the material of the protruding parts 16 and the base protruding parts 59 is acrylic resin. In this case, the protruding parts 16 and the base protruding parts 59 can be installed in the same process. Therefore, the electrophoretic display device 55 can be manufactured with high productivity compared to the case of manufacturing the base protruding parts 59 and the protruding parts 16 in respective processes separate from each other.

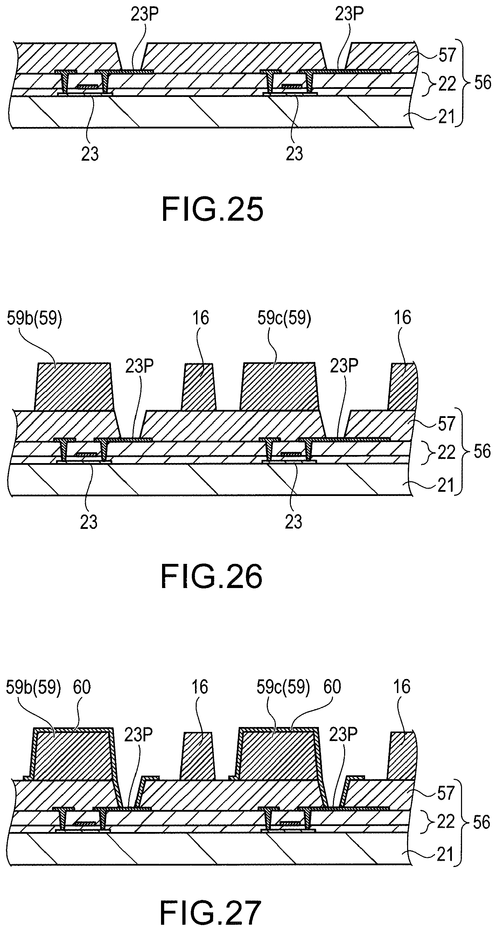

Then, a method of manufacturing the electrophoretic display deice 55 described above will be described with reference to Fig. 24 through Fig. 28. Fig. 24 is a flowchart of the method of manufacturing the electrophoretic display device, and Fig. 25 through Fig. 28 are schematic side cross-sectional views for explaining the method of manufacturing the electrophoretic display device. In the flowchart shown in Fig. 24, the step S11 corresponds to an insulating film installation process. This process is a process for installing the first insulating film 57 on the element layer 22. Then, the process proceeds to the step S12. The step S12 corresponds to a protruding part installation process. This process is a process for installing the protruding parts 16 and the base protruding parts 59 on the element substrate 56. Then, the process proceeds to the step S13. The step S13 corresponds to a pixel electrode installation process.

This process is a process for installing the second insulating film 60 and the electrode film 61 on each of the base protruding parts 59. Then, the process proceeds to step S4. The step S4 corresponds to an electrophoretic sheet installation process. This process is a process for installing the electrophoretic sheet 11 on the element substrate 56. Then, the process proceeds to the step S5. The step S5 corresponds to a substrate assembling process. This process is a process for assembling the element substrate 56 and the protective substrate 14 with each other. Due to the processes described hereinabove, the electrophoretic display device 55 is completed.

Then, the manufacturing method will be described in detail in association with the steps shown in Fig. 24 using Fig. 25 through Fig. 28.

Fig. 25 is a diagram corresponding to the insulating film installation process in the step S11. As shown in Fig. 25, the element layer 22 is installed on the base member 21. The installation method of the element layer 22 is the same as in the first embodiment, and the description thereof will be omitted. Further, the first insulating film 57 is installed on the element layer 22. A film made of SiO₂ is installed on the element layer 22 using a CVD method. Then, the SiO₂ film is patterned using a photolithography method to install the contact holes. The etching method used for forming the contact holes is not particularly limited, but in the present embodiment, for example, a dry etching method is used.

Fig. 26 is a diagram corresponding to the protruding part installation process in the step S12. As shown in Fig. 26, the protruding parts 16 and the base protruding parts 59 are installed on the first insulating film 57. Firstly, a solution having the resin dissolved is applied on the first insulating film 57 with a spinner, a roll coater, or a variety of printing methods, and is then dried. Then, the resin film is patterned using a photolithography method to install the protruding parts 16 and the base protruding parts 59. The protruding part 16 is located between the first base protruding part 59b and the second base protruding part 59c.

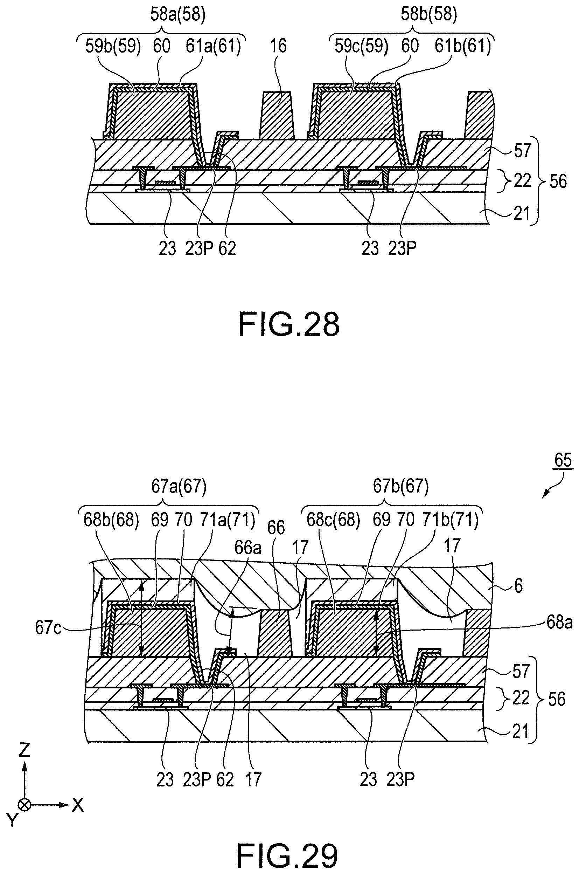

Fig. 27 and Fig. 28 are diagrams corresponding to the pixel electrode installation process in the step S13. As shown in Fig. 27, an Si₃N₄ film with a film thickness of about 800 nm is formed on the first insulating film 57, the protruding parts 16, and the base protruding parts 59. Then, the Si₃N₄ film is patterned using a photolithography method to install the second insulating film 60. The second insulating film 60 is installed so as to cover the base protruding part 59, and exposes the drain electrode 23p in the contact hole.

As shown in Fig. 28, an AlCu film with a film thickness of about 500 nm is then formed on the second insulating films 60 and in the contact holes using a deposition method such as a sputtering method. Subsequently, the AlCu film is etched to form the electrode films 61 and the through electrodes 62. The through electrodes 62 are each an electrode installed in the contact hole, and each connect the drain electrode 23p and the electrode film 61 to each other.

In this process, the pixel electrodes 58 are completed. The second insulating film 60 and the first electrode film 61a are installed on the first base protruding part 59b to thereby complete the first pixel electrode 58a. Further, the second insulating film 60 and the second electrode film 61b are installed on the second base protruding part 59c to thereby complete the second pixel electrode 58b. The etching method is not particularly limited, but in the present embodiment, a wet etching method is used.

Subsequently to the pixel electrode installation process in the step S13, the electrophoretic sheet installation process in the step S4 and the substrate assembling process in the step S5 are performed. In the step S4, the first adhesive film 6 is installed on the first electrode film 61a and the second electrode film 61b. It should be noted that the step S4 and the step S5 are the same as those in the first embodiment, and the description thereof will be omitted.

As described above, according to the present embodiment, the following advantages are obtained.

(1) According to the present embodiment, the pixel electrodes 58 are each provided with the base protruding part 59, and the electrode film 61 is installed on the base protruding part 59. Further, the protruding parts 16 and the base protruding parts 59 are the same in the height from the element substrate 56. In this case, it is possible to surely make the height of the pixel electrode 58 in the Z direction higher than that of the protruding part 16. Therefore, it is possible to prevent the bubbles 18 from occurring between the pixel electrodes 58 and the first adhesive film 6.

(2) According to the present embodiment, the protruding parts 16 and the base protruding parts 59 are the same in material. In this case, the protruding parts 16 and the base protruding parts 59 can be installed in the same process. Therefore, the electrophoretic display device 55 can be manufactured with high productivity compared to the case of manufacturing the base protruding parts 59 and the protruding parts 16 in respective processes separate from each other.

(3) According to the present embodiment, the first base protruding part 59b, the second protruding part 59c, and the protruding part 16 are installed. Further, the first electrode film 61a is installed on the first base protruding part 59b, and the second electrode film 61b is installed on the second base protruding part 59c. The protruding part 16 is located between the first base protruding part 59b and the second base protruding part 59c. Therefore, it is possible to make the protruding part 16 be located between the first pixel electrode 58a and the second pixel electrode 58b.

### Fifth Embodiment

Then, an electrophoretic display device according to another embodiment of the invention will be described with reference to Fig. 29 through Fig. 35. The present embodiment is different from the fourth embodiment in the point that there is adopted a structure in which the pixel electrode is installed on the interconnection on the base protruding part with plating. It should be noted that the description of the same point as in the fourth embodiment will be omitted.

Fig. 29 is a schematic side cross-sectional view showing a principal part of the structure of the element substrate. As shown in Fig. 29, in an electrophoretic display device 65, the protruding parts 66 and the pixel electrodes 67 are installed on the first insulating film 57 of the element substrate 56. The protruding parts 66 are each installed between the pixel electrodes 67 adjacent in the X direction to each other. One of the pixel electrodes 67 adjacent in the X direction to each other is defined as a first pixel electrode 67a, and the other is defined as a second pixel electrode 67b. The first pixel electrode 67a and the second pixel electrode 67b have the same structure.

Further, the pixel electrode 67 is constituted by the base protruding part 68, the second insulating film 69, the through electrode 70, and the electrode film 71 as an electrically-conductive film. The second insulating film 69 is installed so as to cover the base protruding part 68. The through electrode 70 is an interconnection installed continuously from the surface of the second insulating film 69 to the drain electrode 23p. The electrode film 71 is an electrode installed so as to overlap the through electrode 70 above the base protruding part 68.

Contact holes are installed in the first insulating film 57, and in each of the contact holes, there is installed a through electrode 62 to be connected to the drain electrode 23p. Further, the through electrode 62 is connected to the through electrode 70. The base protruding part 68 in the first pixel electrode 67a is defined as a first base protruding part 68b, and the base protruding part 68 in the second pixel electrode 67b is defined as a second base protruding part 68c. The electrode film 71 installed on the first base protruding part 68b is defined as a first pixel electrode 71a, and the electrode film 71 installed on the second base protruding part 68c is defined as a second pixel electrode 71b.

The height in the Z direction of the protruding parts 66 is defined as a protruding part height 66a, and the height in the Z direction of the base protruding part 68 is defined as a base protruding part height 68a. The protruding part height 66a and the base protruding part height 68a are equal to each other. Further, the height of the pixel electrodes 67 is defined as an electrode height 67c. In this case, the electrode height 67c is a height obtained by adding the thickness of the second insulating film 69, the thickness of the through electrode 70, and the thickness of the electrode film 71 to the base protruding part height 68a. Therefore, since the electrode height 67c is surely higher than the protruding part height 66a, it is possible to make the bubbles 18 hard to occur on the pixel electrodes 67.

The protruding parts 66 and the base protruding parts 68 are made of the same material of resin. In the present embodiment, for example, the material of the protruding parts 66 and the base protruding parts 68 is acrylic resin. In this case, the protruding parts 66 and the base protruding parts 68 can be installed in the same process. Therefore, the electrophoretic display device 65 can be manufactured with high productivity compared to the case of manufacturing the base protruding parts 68 and the protruding parts 66 in respective processes separate from each other.

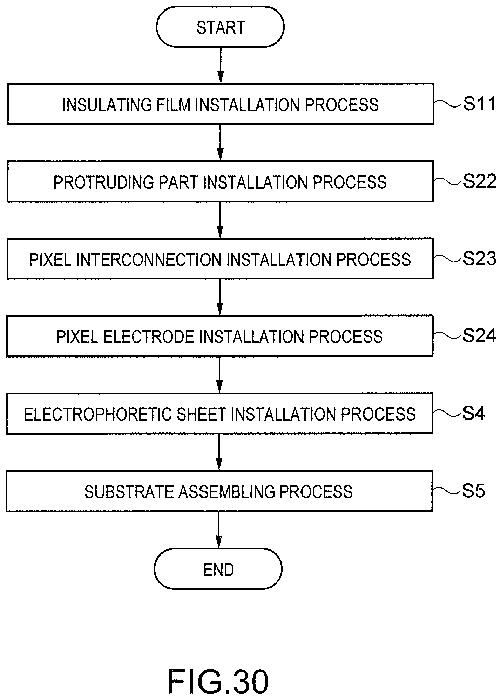

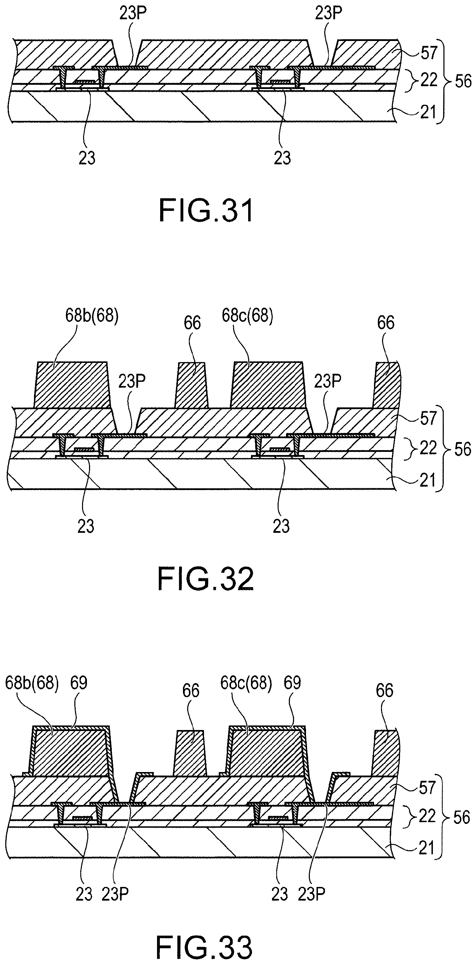

Then, a method of manufacturing the electrophoretic display deice 65 described above will be described with reference to Fig. 30 through Fig. 35. Fig. 30 is a flowchart of the method of manufacturing the electrophoretic display device, and Fig. 31 through Fig. 35 are schematic side cross-sectional views for explaining the method of manufacturing the electrophoretic display device. In the flowchart shown in Fig. 30, the step S11 corresponds to an insulating film installation process. This process is a process for installing the first insulating film 57 on the element layer 22. Then, the process proceeds to the step S22. The step S22 corresponds to a protruding part installation process. This process is a process for installing the protruding parts 66 and the base protruding parts 68 on the element substrate 56. Then, the process proceeds to the step S23. The step S23 corresponds to a pixel interconnection installation process. This process is a process for installing the second insulating film 69 and the through electrode 70 on each of the base protruding parts 68. Then, the process proceeds to the step S24. The step S24 corresponds to a pixel electrode installation process. This process is a process for installing the electrode film 71 on the through electrode 70 on each of the base protruding parts 68. Then, the process proceeds to step S4. The step S4 corresponds to an electrophoretic sheet installation process. This process is a process for installing the electrophoretic sheet 11 on the element substrate 56. Then, the process proceeds to the step S5. The step S5 corresponds to a substrate assembling process. This process is a process for assembling the element substrate 56 and the protective substrate 14 with each other. Due to the processes described hereinabove, the electrophoretic display device 65 is completed.

Then, the manufacturing method will be described in detail in association with the steps shown in Fig. 30 using Fig. 31 through Fig. 35.

Fig. 31 is a diagram corresponding to the insulating film installation process in the step S11. As shown in Fig. 31, the element layer 22 is installed on the base member 21. Further, the first insulating film 57 is installed on the element layer 22. The installation method of the element layer 22 and the first insulating film 57 is the same as in the fourth embodiment, and the description thereof will be omitted.

Fig. 32 is a diagram corresponding to the protruding part installation process in the step S22. As shown in Fig. 32, the protruding parts 66 and the base protruding parts 68 are installed on the first insulating film 57. Firstly, a solution having the resin dissolved is applied on the first insulating film 57 with a spinner, a roll coater, or a variety of printing methods, and is then dried. Then, the resin film is patterned using a photolithography method to install the protruding parts 66 and the base protruding parts 68. The protruding part 66 is located between the first base protruding part 68b and the second base protruding part 68c.

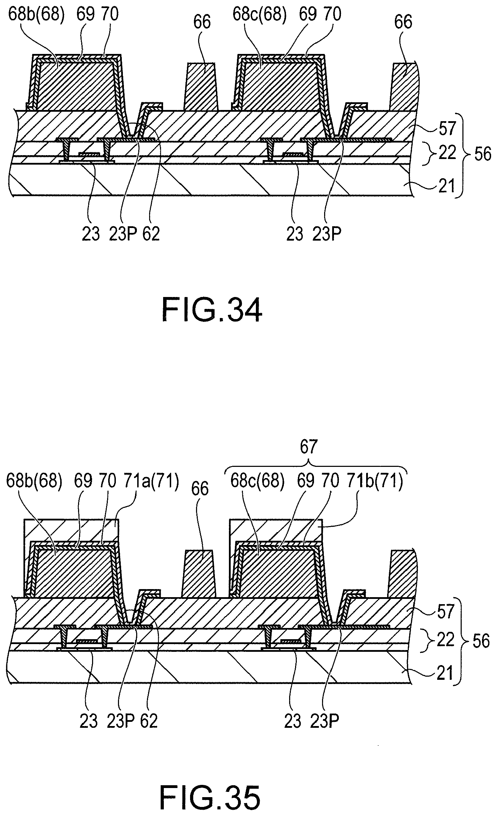

Fig. 33 and Fig. 34 are diagrams corresponding to the pixel interconnection installation process in the step S23. As shown in Fig. 33, an Si₃N₄ film with a film thickness of about 800 nm is formed on the first insulating film 57, the protruding parts 66, and the base protruding parts 68. Then, the Si₃N₄ film is patterned using a photolithography method to install the second insulating film 69. The second insulating film 69 is installed so as to cover the base protruding part 68, and exposes the drain electrode 23p in the contact hole.

As shown in Fig. 34, an AlCu film with a film thickness of about 500 nm is then formed on the second insulating films 69 and in the contact holes using a deposition method such as a sputtering method. Subsequently, the AlCu film is etched to form the through electrodes 70. The through electrodes 70 are each an electrode installed in the contact hole, and are each an interconnection continuing from the drain electrode 23p to the surface of the base protruding part 68. The etching method is not particularly limited, but in the present embodiment, a wet etching method is used.

Fig. 35 is a diagram corresponding to the pixel electrode installation process in the step S24. As shown in Fig. 35, the electrode film 71 is installed on the through electrode 70. The first pixel electrode 71a is installed so as to overlap the second insulating film 69 and the through electrode 70 on the first base protruding part 68b. The second pixel electrode 71b is installed so as to overlap the second insulating film 69 and the through electrode 70 on the second base protruding part 68c. The installation method of the electrode films 71 is the same as the installation method of the pixel electrodes 5 in the first embodiment, and the description thereof will be omitted. Subsequently to the step S24, the electrophoretic sheet installation process in the step S4 and the substrate assembling process in the step S5 are performed. In the step S4, the first adhesive film 6 is installed on the first pixel electrode 71a and the second pixel electrode 71b. The step S4 and the step S5 are the same as those in the first embodiment, and the description thereof will be omitted. Due to the processes described hereinabove, the electrophoretic display device 65 is completed.

As described above, according to the present embodiment, the following advantages are obtained.
(1) According to the present embodiment, the pixel electrodes 67 are each provided with the base protruding part 68, and the electrode film 71 is installed on the base protruding part 68. Further, the protruding parts 66 and the base protruding parts 68 are the same in the height from the element substrate 56. In this case, it is possible to surely make the height of the pixel electrode 67 in the Z direction higher than that of the protruding part 66. Therefore, it is possible to prevent the bubbles 18 from occurring between the pixel electrodes 67 and the first adhesive film 6.
(2) According to the present embodiment, the protruding parts 66 and the base protruding parts 68 are the same in material. In this case, the protruding parts 66 and the base protruding parts 68 can be installed in the same process. Therefore, the electrophoretic display device 65 can be manufactured with high productivity compared to the case of manufacturing the base protruding parts 68 and the protruding parts 66 in respective processes separate from each other.
(3) According to the present embodiment, the first base protruding part 68b, the second protruding part 68c, and the protruding part 66 are installed. Then, the second insulating film 69, the through electrode 70, and the first pixel electrode 71a are installed on the first base protruding part 68b, and the second insulating film 69, the through electrode 70, and the second pixel electrode 71b are installed on the second base protruding part 68c. The protruding part 66 is located between the first base protruding part 68b and the second base protruding part 68c. Therefore, it is possible to make the protruding part 66 be located between the first pixel electrode 67a and the second pixel electrode 67b.

### Sixth Embodiment

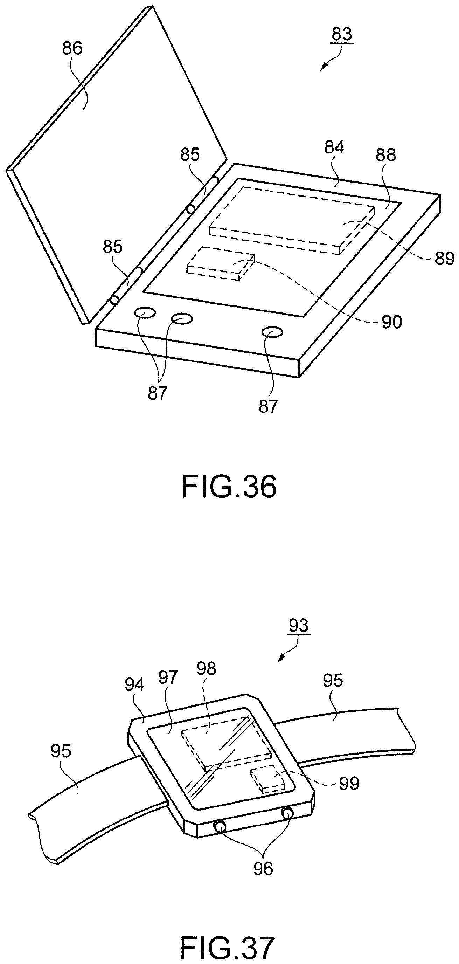

Then, an electronic apparatus equipped with the electrophoretic display device according to an embodiment of the invention will be described with reference to Fig. 36 and Fig. 37. Fig. 36 is a schematic perspective view showing a structure of an electronic book, and Fig. 37 is a schematic perspective view showing a structure of a watch. As shown in Fig. 36, the electronic book 83 as the electronic apparatus is provided with a case 84 having a plate-like shape. In the case 84, there is installed a lid part 86 via a hinge 85. Further, in the case 84, there are installed operation buttons 87 and a display section 88 as a display device. It is possible for the operator to operate the operation buttons 87 to control the content to be displayed on the display section 88.

Inside the case 84, there are installed a control section 89 for controlling the electronic book 83, and a drive section 90 as a drive device for driving the display section 88. The control section 89 outputs display data to the drive section 90. The drive section 90 inputs the display data, and then drives the display section 88. Then, the drive section 90 makes the display section 88 display the content corresponding to the display data. As the display section 88, there is used either one of the electrophoretic display device 1, the electrophoretic display device 31, the electrophoretic display device 36, the electrophoretic display device 55, and the electrophoretic display device 65. Therefore, the electronic book 83 can be made as a device using the electrophoretic display device hard for the bubbles 18 to occur as the display section 88.

As shown in Fig. 37, the watch 93 as the electronic apparatus is provided with a case 94 having a plate-like shape. In the case 94, there is installed a band 95, and it is possible for the operator to wind the band 95 around the wrist to fix the watch 93 to the wrist. Further, in the case 94, there are installed operation buttons 96 and a display section 97 as a display device. It is possible for the operator to operate the operation buttons 96 to control the content to be displayed on the display section 97.

Inside the case 94, there are installed a control section 98 for controlling the watch 93, and a drive section 99 as a drive device for driving the display section 97. The control section 98 outputs display data to the drive section 99. The drive section 99 inputs the display data, and then drives the display section 97. Then, the drive section 99 makes the display section 97 display the content corresponding to the display data. Further, as the display section 97, there is used either one of the electrophoretic display device 1, the electrophoretic display device 31, the electrophoretic display device 36, the electrophoretic display device 55, and the electrophoretic display device 65. Therefore, the watch 93 can be made as a device using the electrophoretic display device hard for the bubbles 18 to occur as the display section 97.

It should be noted that the present embodiment is not limited to the embodiments described above, but various modifications or improvements can also be added by those skilled in the art within the technical concept of the invention. Some modified examples will be described below.

### Modified Example 1

In the first embodiment described above, the protruding parts 16 are installed between the pixel electrodes 5 in each of the rows. It is also possible to install a row of the protruding parts 16 with respect to two rows of the pixel electrodes 5. Further, the protruding parts 16 each have a shape of a straight line extending in the Y direction. It is also possible for the protruding parts 16 to form a stepwise shape extending in the X direction and the Y direction. In this case, it is also possible to discharge the bubbles 18 located between the pixel electrodes 5 and the first adhesive film 6 through the passages 17.

### Modified Example 2

In the first embodiment described above, each of the microcapsules 7 has a circular shape. The shape of the microcapsule 7 is not particularly limited, and can also be a quadrangular shape, a polygonal shape, or an elliptical shape. The bubbles 18 can be discharged irrespective of the shape of the microcapsule 7.

### Modified Example 3

In the first embodiment described above, each of the pixel electrodes 5 has a quadrangular shape. The shape of the pixel electrode 5 is not particularly limited, and can also be a polygonal shape, a circular shape, or an elliptical shape. The bubbles 18 can be discharged irrespective of the shape of the pixel electrode 5. The width in the X direction of the protruding parts 16 is made constant. It is not required for the width of the protruding parts 16 to be constant. The width can also be varied in accordance with the shapes of the pixel electrodes 5. It should be noted that the contents of Modified Example 1 through Modified Example 3 can also be applied to the second through fifth embodiments described above.

### Modified Example 4

In the first embodiment described above, the pixel electrodes 5 are installed after installing the protruding parts 16. It is also possible to reverse the sequence to install the protruding parts 16 after installing the pixel electrodes 5. It is also possible to adopt a sequence easy to manufacture.

## Claims

1. A display device comprising:
a first pixel electrode and a second pixel electrode;
an adhesive film disposed so as to cover the first pixel electrode and the second pixel electrode; and
a passage, which is located between the first pixel electrode and the second pixel electrode, which opens in a periphery of the adhesive film, and through which a gas passes.

2. The display device according to Claim 1, further comprising:
a protruding part disposed along the passage.

3. The display device according to Claim 2, wherein a height of the protruding part in a thickness direction of a substrate is one of equal to or lower than a height of the first pixel electrode and a height of the second pixel electrode.

4. The display device according to Claim 2 or 3, wherein the first pixel electrode and the second pixel electrode each have a base protruding part and an electrically-conductive film located on the base protruding part, and
the protruding part and the base protruding part are equal in height from the substrate to each other.

5. The display device according to Claim 4, wherein the protruding part and the base protruding part are same in material as each other.

6. A display device comprising:
a first pixel electrode and a second pixel electrode;
an insulating film disposed between the first pixel electrode and the second pixel electrode so as to be separated from the first pixel electrode and the second pixel electrode;
and
an adhesive film disposed so as to cover the first pixel electrode, the second pixel electrode, and the insulating film.

7. The display device according to Claim 6, further comprising:
a passage, which is located between the first pixel electrode and the second pixel electrode, which opens in a periphery of the adhesive film, and through which a gas passes.

8. An electronic apparatus comprising:
the display device according to any one of the preceding claims; and
a drive device adapted to drive the display device.

## Amended claims

### Amended claims in accordance with Rule 137(2) EPC.

1. An electrophoretic display device (1) comprising:
a first pixel electrode (5a) and a second pixel electrode (5b);
an adhesive film (6,8,15) disposed so as to cover the first pixel electrode (5a) and the second pixel electrode (5b);
a passage (17), which is located between the first pixel electrode (5a) and the second pixel electrode (5b), which opens in a periphery of the adhesive film (6,8,15), **characterized in that**
a gas passes through the passage (17); and
a protruding part (16) is disposed along the passage (17).

2. The electrophoretic display device (1) according to Claim 1, further comprising:
a substrate (2), wherein a height of the protruding part (16) in a thickness direction of the substrate (2) is one of equal to or lower than a height of the first pixel electrode (5a) and a height of the second pixel electrode (5b).

3. The electrophoretic display device (1) according to any of the preceding claims, wherein
the first pixel electrode (5a) and the second pixel electrode (5b) each have a base protruding part (59) and an electrically-conductive film (61) located on the base protruding part (16), and
the protruding part (16) and the base protruding part (59) are equal in height from the substrate (2) to each other.

4. The electrophoretic display device (1) according to Claim 3, wherein
the protruding part (16) and the base protruding part (59) are same in material as each other.

5. The electrophoretic display device (1) according to Claim 1, further comprising:
an insulating film (60) disposed between the first pixel electrode (5a) and the second pixel electrode (5b) so as to be separated from the first pixel electrode (5a) and the second pixel electrode (5b).

6. An electronic apparatus comprising:
the electrophoretic display device (1) according to any one of the preceding claims; and
a drive device (90) adapted to drive the electrophoretic display device (1).
